(19) **Europäisches Patentamt**

**European Patent Office**

**Office européen des brevets**

(11) **EP 1 092 690 B1**

(12) **EUROPEAN PATENT SPECIFICATION**

(45) Date of publication and mention
of the grant of the patent:
**13.07.2005   Bulletin 2005/28**

(51) Int Cl.⁷: **C04B 7/42**, C04B 22/10
// C04B111:10

(21) Application number: **00121532.6**

(22) Date of filing: **30.09.2000**

(54) **Method of producing a cement with reduced content of chromium**

Verfahren zur Herstellung von Zement mit niedrigem Chromgehalt

Procédé de fabrication de ciment ayant une teneur réduite en chrome

(84) Designated Contracting States:
**AT CH DE FR IT LI**
Designated Extension States:
**SI**

(30) Priority: **12.10.1999 SK 141299**

(43) Date of publication of application:
**18.04.2001   Bulletin 2001/16**

(73) Proprietor: **Povazská cementáren, a.s.**
**01863 Ladce (SK)**

(72) Inventors:
• **Martauz, Pavel**
**01863 Ladce (SK)**
• **Strigác, Julius**
**98511 Halic (SK)**
• **Orság, Zdeno**
**91101 Trencin (SK)**

(74) Representative: **Musil, Dobroslav, Dipl.-Ing**
**Patent Office**
**Cejil 38**
**602 00 Brno (CZ)**

(56) References cited:
**DD-A- 246 983          US-A- 4 572 739**

• **DATABASE CHEMABS [Online] CHEMICAL ABSTRACTS SERVICE, COLUMBUS, OHIO, US; HONG, RYE-SIK ET AL: "Use of siderite as the raw material of cement. (Com. 1)" retrieved from STN Database accession no. 87:121857 CA XP002158086 & HWAHAK KWA HWAHAK KONGOP (1976), 19(6), 285-7 , 1976,**
• **BLOWES D W ET AL: "IN-SITU REMEDIATION OF CR(VI)-CONTAMINATED GROUNDWATER USING PERMEABLE REACTIVE WALLS: LABORATORY STUDIES" ENVIRONMENTAL SCIENCE AND TECHNOLOGY,US,AMERICAN CHEMICAL SOCIETY. EASTON, PA, vol. 31, no. 12, 1 December 1997 (1997-12-01), pages 3348-3357, XP000751086 ISSN: 0013-936X**
• **DATABASE WPI Section Ch, Week 197552 Derwent Publications Ltd., London, GB; Class L02, AN 1975-86070W XP002158087 & SU 464 552 A (CEMENT IND RES INST), 2 July 1975 (1975-07-02)**

## Description

Field of the invention

The present invention relates to method of producing a cement with reduced content of chromium.

Prior art

At present a cement is still main representative of inorganic hydraulic binders. Starting raw materials (limestone, marl, clay slate, clay, loam etc.) are ground forming a fine homogenous mixture-raw meal, heated preferably in cyclone preheaters and consequently in rotary kiln up to the temperatures in a range of 1400 to 1500°C. Cooling the mixture results in forming cement clinker, further fine ground. Calcium sulfate is added in grinding for setting time control. In order to obtain high quality product, mixture of raw materials must be of composition that conforms to, beside other, e.g. silica modulus, alumina modulus, must have a proper lime saturation factor, appropriate fineness, humidity and other known properties. Mixture of raw materials considered as ideal, would be the mixture that conforms to the mentioned requirements for chemical composition directly in raw materials extraction. Mostly the mixture of raw materials for cement production must, however, be composed of two or more components coming from different sources. It is necessary to correct the chemical composition of raw materials mixture very often, by iron compounds as iron correction component. This component is supplied mostly in the form of various metallurgical wastes, from treatment processes, from ferrous and non-ferrous metalurgy such as slags, muds and so. Cement as a product of high temperature reactions between the components of raw materials mixture can thus contain also compounds of the elements that come with single components of the raw mixture, for example chromium compounds and compounds of other heavy metals.

Chromium in cement is present as $Cr^{III}$ and $Cr^{VI}$, it means, as $Cr^{III}$ compounds and chromates. While chromium in the form of $Cr^{III}$ is considered as nonhazardous from a health point of view, its chromate form is partially or completely soluble in water and is hazardous for the health. It causes skin disease, so called chromium eczema and related literature refers to its toxicity and potential carcinogenic effects.

Chromium compounds are brought to cement by raw materials mixture, from wear of rotary kiln lining and from grinding mills. The most significant source is mixture of raw materials including iron correction component, which usually brings the majority of chromium compounds to the mixture.

Even if the raw materials for cement production contains chromium mostly in the form of $Cr^{III}$ compounds, this is partially or completely oxidized, when exposed to high temperatures, oxidizing atmosphere and alkaline environment of clinker melt in the rotary kiln, to harmful $Cr^{VI}$ compounds - chromates. The $Cr^{VI}$/ total Cr ratio in cement is usually in a range of 0.2 to 0.4.

Total amount of chromium compounds in cement differs and depends especially on the used raw materials and production technology. Average content of soluble $Cr^{VI}$ compounds in Portland cements produced in various European cement plants mostly ranges between 15 and 100 ppm Cr (ppm Cr = mg $Cr^{VI}$ x $kg^{-1}$ of cement). According to Germany technical prescription (TRGS 613) for a work with harmful substances of 1993, the upper limit of 2 ppm $Cr^{VI}$ in cement or in product containing cement, is introduced for the cements identified as cements with low content of Cr. The content of $Cr^{VI}$ is determined according to the above mentioned prescription by leaching of soluble chromates in water within 15 minutes, at room temperature, with continuous stirring and ratio of water/cement=4 and expressed as microgram $Cr^{VI}$ to gram of cement.

Disadvantage of present state of the art is, that the majority of cements does not conform to the above mentioned limit Higher contents of $Cr^{VI}$ compounds are leached to water medium after mixing with water and can be harmful in contact with skin.

Current methods for reducing the content of chromates in cement utilizes reducing agents added to cement, such as green salt and various hydrates of ferrous sulphate according to US patent No. 4,57,739 or international patent application PCT/DK83/00106/WO 84/01942, further an adding ferrogypsum according to international patent application PCT/SE84/00011/WO 84/02900, adding aldehydes EP 06973280 respectively lignosulphonates EP 0630869 or PV 0761-94 (SK), prior to, during or after cement grinding.

Purpose of the invention is to achieve the reducing of the total chromium content in cement present in input raw meal and thus achieving primary reduction of chromium content in final product - in cement. Further purpose is to reduce the content of chromates in cement less than 2 ppm of $Cr^{VI}$ in order to achieve the lowest leaching of $Cr^{VI}$ in water after mixing cement with water because the compounds $Cr^{VI}$ are hygienic unhealthy.

Description of the invention

Method of producing a cement with reduced content of chromium is based on that, mechanically and/or thermally treated iron carbonates acting as iron correction component are added 0.01 to 10% by weight to the mixture of raw materials composed of basic regular cement components. Following burning the mixture at 1400 to 1500 °C causes primary reduction of $Cr^{VI}$ content in cement to values from 0.5 to 20 ppm of $Cr^{VI}$. Into such prepared cement, chemically treated - activated iron carbonates are added during and/or prior to grinding in the amount of 0.01 to 1 % by weight.

Advantageous is, when natural ferrous carbonate - siderite is used as iron carbonate.

Advantageous can also be, when natural calcium ferrous carbonate — ankerite is used as iron carbonate.

Advantage also is, that the mentioned thermal treatment is performed by calcining mechanically treated iron carbonate and/or its concentrate within temperature range from the temperature of its decomposition up to 1000 °C. Favorable is thermal treatment in the kiln atmosphere with lack of air with lowered partial pressure of oxygen up to almost complete decomposition of the carbonates. Content of iron compounds in such prepared material, analytically expressed as ferric oxide is at least 30%, preferably more than 60%.

Advantage is also, when the chemical treatment of iron carbonate and/or its concentrate is performed by activation using mineral acid.

Advantage is also, when the chemical treatment of iron carbonate and/or its concentrate is performed by activation using organic acid.

Substituting currently used correction components, such as various wastes, filter dusts, muds containing besides iron compounds also considerable amount of chromium compounds (e.g. 1 to 3% by weight of $Cr_2O_3$) for natural ferrous carbonate (contents of $Cr_2O_3$ for example at the level n x $10^{-3}$% where n belongs to the interval from 0.1 to 10) or for natural calcium ferrous carbonate (contents of $Cr_2O_3$ also at the level ca. n x $10^{-3}$%) allows to achieve the reduction of total content of chromium compounds in cement and thus the reduction of harmful $Cr^{VI}$ compounds, in comparison with current state of the art from the present levels from 15 to 100 ppm to the levels less than 0.5 to 20 ppm of $Cr^{VI}$. Reducing total content of chromium in the raw meal thus allows also to reduce the content of harmful $Cr^{VI}$ compounds in cement. Further reducing the content of $Cr^{VI}$ compounds in the cement below the limit of 2 ppm required by the technical prescription is possible with addition of an extra portion of activated iron carbonates.

The activation or activated raw material component utilized for the purpose of invention means a treatment, e.g. mechano-chemical treatment, or appropriately treated iron carbonate forming partially or completely fine and/or water soluble form, where advantageous is that ferrous compounds remain in the product of activation which contain iron mainly in oxidative state II.

An expression "appropriately treated natural material" means in following text the material, e.g. any of raw material component treated mechanically, thermally or chemically or in combination of any two or all types of the treatments.

To achieve and/or increase required effect, it is favorable, when appropriately treated iron carbonate is mixed, or appropriately trated together with other(s) natural or synthetic puzzolan(s).

For example appropriately treated siderite, analysis recalculated for annealed state, may contain:

| Component | % by weight | Component | % by weight |
|-----------|-------------|-----------|-------------|
| $Fe_2O_3$ | 15.0 to 85 | CaO | < 25 |
| MnO | 1.0 to 3.5 | MgO | < 5 |
| $BaSO_4$ | < 3.5 | $Na_2O+K_2O$ | 0.2 to 1 |
| $Al_2O_3$ | < 3.5 | $SiO_2$ | < 30 |

Appropriate treatment of the raw material component can be performed separately or together with other ground materials prior to their burn, during grinding or after grinding.

Appropriately treated natural material by mechanical manner has fineness comparable with fineness of ordinary p-cement and is prepared by usual crushing of raw material, grinding and optionally by separation of required fraction.

Thermal treatment can be performed by calcining mechanically treated raw material, e.g. siderite or its concentrate within temperature range from the temperature of siderite decomposition to 1000 °C. Favorable is thermal treatment in the kiln atmosphere with lack of air with lowered partial pressure of oxygen up to almost complete decomposition of the carbonates. Content of iron compounds in such treated material, analytically expressed as ferric oxide is at least 30%, preferably more than 60%.

Chemical treatment is performed by activating the raw material or concentrate, e.g. fine siderite concentrate with mineral or organic acid. Chemically the basis of activation lie in partial conversion of siderite and/or ankerite in acid environment to the form that is more soluble in water than natural ferrous carbonate. Reaction can be for example described by the equation:

$$FeCO_3 + (H_3O)^+ \rightarrow 0.5\ Fe^{2+} + 1.5\ H_2O + 0.5\ CO_2\uparrow + 0.5\ FeCO_3 + heat$$

(siderite) (acid) $\rightarrow$ (soluble salt)       (gas) (indecomposed siderite)

Fine siderite is added rarely in the trace amounts of excess, more often up to 300% excess (stoichiometrically), thus forming powdered, fine-grained or granulated product of the activation - activated siderite, which, expressed analytically, contains at least 30% by weight of $Fe_2O_3$, partially, preferably completely, in oxidative state II and partially soluble in water. It is possible to partially or completely substitute excessive siderite by powdered material, which can be ankerite, limestone, fly ash, cement, filter dusts, cement raw meal, zeolite, blast-furnace slug etc. Acid environment is formed in the process of activation by mineral or organic acids, such as sulphuric acid, waste acids from metallurgical, preferably steelmaking processes, waste acids from glass surface treatment processing, trihydrogenphosphoric acid, naphtalenesulphonic acid, waste acids from petroleum refining processes.

Favorable in activation is to use the industrial waste acids with anion component, which is not harmful in cement or concrete, e.g. acid from spent pickling baths or acids from glass surface treatment processing, neutralized with the mentioned , mechanically treated iron carbonates.

Thus the preparation of the activated material and harmful waste elimination and exploitation is favorably related.

Activated siderite is suitable to add during or after grinding a clinker to the cement. Activated siderite secondarily reduces the content of $Cr^{VI}$ compounds in cement.

It is known, that the additives of fine ground limestone to the cement improve usable characteristics of cement. (for example: Regourd, M., v:8. ICCC, Vol.1, pg 199 (1986); Gussino, L., Negro, A., v:7. ICCC, Vol.3, pg. V-62 (1980); Strubble, L., Skalný, J., Mindess, S., Cem. Concr. Res. 10, 277 (1980)). It can be reasonably assumed, referring to the several analogous characteristics of siderite and calcite, that the presence of siderite in cement can improve some of its characteristics, similarly to the additives of ground calcite, for example rheology of cement paste, mechanical characteristics and mostly corrosion resistance.

Favorably treated natural material, for example mechanically, thermally and/or chemically treated siderite, is added to the other processed materials, e.g. raw meal or cement, in such proportion to at least keep required characteristics of the raw material mixture and of cement, particularly silica modulus, alumina modulus, lime saturation factor, required standard characteristics of cement (STN-ENV 197-1, DIN-1164-1, ÖNORM B 3310, TRGS 513 (1993)).

Description of the preferred embodiments.

Example 1

Raw material mixture, containing 89.3% by weight of limestone, 9.3% by weight of marl and 1.4% by weight of the siderite concentrate, has been calculated to obtain following parameters:

lime saturation factor according to Lea-Parker $S_{LP}$ = 96
silica modulus $M_S$ = 2.8
alumina modulus $M_A$ = 1.7.

Raw meal of the mentioned composition was ordinary burned in rotary kiln at the temperature 1500 °C. It was determined, that the cements prepared from the mentioned raw materials with addition of natural ferrous carbonate (siderite), leached by distilled water according to the prescription TRGS 613, contained less than < 0.5 to 20 ppm $Cr^{VI}$, what indicates significant reduction of $Cr^{VI}$ content in contrary to the values from 50 to 90 ppm of $Cr^{VI}$ in the cement burnt from raw material mixture containing limestone, marl and waste mud from nickel production. Properties of such prepared cements conform to STN-ENV-197-1, DIN 1164-1 and/or ÖNORM B 3310.

Example 2

Raw material mixture, containing 88.1% by weight of limestone, 9.3% by weight of marl and 2.6% by weight of natural calcium ferrous carbonate $CaFe(CO_3)_2$ - ankerite, has been calculated to obtain following parameters:

lime saturation factor according to Lea-Parker $S_{LP}$ = 96
silica modulus $M_S$ = 2.8
alumina modulus $M_A$ = 1.7.

Raw meal of the mentioned composition was ordinary burned in rotary kiln at the temperature 1500 °C. It was determined, that the cements prepared of the mentioned raw materials with addition of natural calcium ferrous carbonate (ankerite), leached by distilled water according to the prescription TRGS 613, contained less than < 0.5 to 20 ppm $Cr^{VI}$, what indicates significant reduction of $Cr^{VI}$ content in contrary to the values from 50 to 90 ppm of $Cr^{VI}$ in the cement burnt from raw material mixture containing limestone, marl and waste mud from nickel production. Properties of such prepared cement samples conform to STN-ENV-197-1, DIN 1164-1 and/or ÖNORM B 3310.

Example 3

Raw material mixture, containing 89.8% by weight of limestone, 9.3% by weight of marl and 0.9% by weight of roasted siderite (thermally treated siderite, mixture of iron oxides), has been calculated to obtain following parameters:

lime saturation factor according to Lea-Parker $S_{LP}$ = 96
silica modulus $M_S$ = 2.8
alumina modulus $M_A$ = 1.7.

Raw meal of the mentioned composition was ordinary burned in rotary kiln at the temperature 1500 °C. It was determined, that the cements prepared of the mentioned raw materials with addition of roasted siderite, leached by distilled water according to the prescription TRGS 613, contained less than < 0.5 to 20 ppm $Cr^{VI}$, what indicates significant improvement and thus as a final result the reduction of $Cr^{VI}$ content in contrary to the values from 50 to 90 ppm of $Cr^{VI}$ in cement burnt from raw material mixture containing limestone, marl and waste mud from nickel production. Properties of such prepared samples conform to STN-ENV-197-1, DIN 1164-1 and/or ÖNORM B 3310.

Example 4

Activated siderite was prepared in the second stage by mixing powdered siderite with a mixture of waste acids from glass surface treatment processing containing $H_2SiF_6$, HF, $H_2SO_4$ and $H_3PO_4$ as the main acid components, and siderite was added in 50% excess in comparison to the stoichiometric calculation. The reacting mixture suspension was mixed, after the end of reaction, with fine siderite in weight ratio 1:2 and dried at the temperature ca 50 °C. Thus activated siderite was added in the cement grinding in amount smaller than 1% to the amount of cement. It was determined, that the cement prepared with activated siderite, leached by distilled water according to the prescription TRGS 613, contained less than 0.5 ppm of $Cr^{VI}$, which is below the limit required by the mentioned prescription. Properties of such prepared cement samples conform to STN-ENV-197-1, DIN 1164-1 and/or ÖNORM B 3310.

Example 5

According to the procedure introduced in example 1 the cement utilizing primary reduction of $Cr^{VI}$ content using siderite concentrate as iron correction component was prepared. The prepared cement contained 13 ppm of leachable $Cr^{VI}$ compounds. The activated siderite prepared as powdered material composed of the siderite concentrate (200% stoichiometric excess of siderite) and the acid component (waste sulphuric acid from steelmaking processes) in such proportion with water in order to obtain powder or even granule characteristics, was mixed (in amount up to 1%) with the cement after the grinding. Thus activated siderite was added to the cement during grinding in amount less than 1% to the amount of cement. It was determined, that the cement prepared with activated siderite, leached by distilled water according to the prescription TRGS 613, contained less than 0.2 ppm of $Cr^{VI}$, what is significantly below the limit required by the mentioned prescription.
Introduced examples are by no means restrictive to the present invention and do not represent all combinations in composition of the raw material mixture.
Adding the activated siderite to the cement is optional and depends either on initial content of $Cr^{VI}$ in the cement or on primary reduction of $Cr^{VI}$ content in the cement made of raw material mixture with the addition of iron carbonates as iron correction component.

Industrial applicability

Commercial success of the cement at international as well as domestic market still more depends not only on reaching product technical parameters, but also on fulfilling the requirements of hygienical standards. New utilization of iron carbonates as iron correction component in the cement raw meal, is dedicated especially for the production of cement with reduced content of $Cr^{VI}$ compounds. The reduced content of $Cr^{VI}$ is achieved by technical solution according to the present invention, primarily by substituting currently used iron correction components, with appropriately treated iron carbonates and secondarily by the addition of appropriately activated siderite during or after cement grinding. Siderite activated by mineral or organic acid has got the required mechanical properties (looseness, fineness) for handling, transportation and dosing to the cement.

The invention can be put into practice utilizing currently used cement production equipment without any modification.

**Claims**

1. Method of producing a cement with reduced content of chromium $Cr^{VI}$ by adding iron carbonate to a mixture of raw materials of cement components, whereby said iron carbonate is used as iron correction component for said mixture, **characterized in that** 0.01 to 10% by weight of mechanically and/or thermally treated iron carbonate is added to said mixture of raw materials as said iron correction component, said mixture and said iron carbonate are burned at a temperature between 1400°C to 1500°C, thus achieving cement with a reduced value between 0.5 and 20 ppm of $Cr^{VI}$ and finally, during and/or after grinding of such prepared cement, chemically treated - activated iron carbonates with an amount between 0.01 to 1% by weight is added to said cement, thus achieving final reduction of $Cr^{VI}$ in said cement with an amount of less than 0.5 ppm.

2. Method according to claim 1, **characterized in that**, the iron carbonate is natural ferrous carbonate - siderite.

3. Method according to claim 1, **characterized in that**, the iron carbonate is natural calcium ferrous carbonate respectively calcium magnesium ferrous carbonate - ankerite.

4. Method according to claim 1, **characterized in that**, the thermal treatment is performed by calcination of mechanically prepared iron carbonate and/or its concentrate within the temperature range from the temperature of its decomposition to 1000 °C.

5. Method according to claim 1, **characterized in that**, the chemical treatment of iron carbonate and/or its concentrate is performed by activation with mineral acid.

6. Method according to claim 1, **characterized in that**, the chemical treatment of iron carbonate and/or its concentrate is performed by activation with organic acid.

**Patentansprüche**

1. Verfahren zur Herstellung von Zement mit einem mittels einer Beisetzung von Eisenkarbonaten in dem Rohstoffgemisch der Zementkomponenten verminderten $Cr^{VI}$-gehalt, wobei diese Eisenkarbonate als eine Eisenkorrekturkomponente für gennantes Gemisch verwendet werden, **dadurch gekennzeichnet, daß** eine Menge von 0,01% bis 10% (Masse) mechanisch und/oder thermisch aufbereiteten Eisenkarbonaten als Eisenkorrekturkomponente in diesem Gemisch von Rohmaterialen zugegeben wird, dieses Gemisch und diese Eisenkarbonate bei einer Temperatur im Bereich 1400° C bis 1500° C gebrannt wird, wodurch sich des Zements mit einem verminderten $Cr^{VI}$-gehalt zwischen 0,5 und 20 ppm erzielt, und schließlich chemisch aufbereitete-aktivierte Eisenkarbonate in einer Menge von 0,01% bis 1% (Masse) in so vorbereiteten Zement während seines Mahlens und/oder nach dem Mahlens zugegeben werden, womit man eine Verminderung des $Cr^{IV}$-gehaltes im Zement auf eine kleinere als 0,5 ppm Menge erzielt.

2. Verfahren nach dem Anspruch 1, **dadurch gekennzeichnet, dass** als Eisenkarbonat ein Natureisen(II)-karbonat - Siderit-gebraucht wird.

3. Verfahren nach dem Anspruch 1, **dadurch gekennzeichnet, dass** als Eisenkarbonat ein Natureisen(II)-karbonat - Ankerit-gebraucht wird.

4. Verfahren nach dem Anspruch 1, **dadurch gekennzeichnet, dass** die Wärmebehandlung durch eine Kalzinierung eines mechanisch aufbereiteten Eisenkarbonats und/oder seines Konzentrats in einem Temperaturbereich zwischen seiner Zerfallstemperatur und 1000°C durchgeführt wird.

**5.** Verfahren nach dem Anspruch1, **dadurch gekennzeichnet, dass** die chemische Aufbereitung von Eisenkarbonat und/oder seinem Konzentrat durch Aktivierung mit einer Mineralsaure durchgeführt wird.

**6.** Verfahren nach dem Anspruch1, **dadurch gekennzeichnet, dass** die chemische Aufbereitung von Eisenkarbonat und/oder seinem Konzentrat durch Aktivierung mit einer organischen Säure durchgeführt wird.


**Revendications**

**1.** Procédé de la production de ciment avec le volume réduit de crome $Cr^{VI}$ en ajoutant le carbonate de fer dans le mélange de matières brutes des composants de ciment, en temps que ces carbonates de fer soient utilisés comme le composant ferrique de correction pour le mélange mentionné, **caractérisé en ce que** la quantité de 0.01 à 10 % massique des carbonates de fer mécaniquement ou thermiquement traités, sont ajoutés dans ce mélange des matières brutes comme le composant ferrique de correction, ce mélange et ces carbonates de fer sont cuits à température de 1400 °C jusqu'à 1500 °C, à l'aide de quoi on obtient le ciment avec le volume réduit de crome $Cr^{VI}$ entre 0,5 à 20 ppm, et finalement on ajoute au ciment préparé de cette façon pendant le broyage et/ou après le broyage les carbonates de fer chimiquement traités - activés dans la quantité de 0 01 à 1 % massique, à l'aide de quoi on obtient le baissement du volume de crome $Cr^{VI}$ dans le ciment jusqu'à la quantité inférieure à 0.5 ppm.

**2.** Procédé suivant la revendication 1, **caractérisé en ce que** le carbonate de fer est le fer carbonaté - la sidérite.

**3.** Procédé suivant la revendication 1, **caractérisé en ce que** le carbonate de fer est le carbonate de calcium ferreux - l'ankérite.

**4.** Procédé suivant la revendication 1, **caractérisé en ce que** le traitement thermique sera effectué à l'aide de la calcination du carbonate de fer mécaniquement traité et/ou de son concentrat dans l'intervalle de température entre la température de sa décomposition et la température 1000°C.

**5.** Procédé suivant la revendication 1, **caractérisé en ce que** le traitement chimique de carbonate de fer et/ou de son concentrat sera effectué à l'aide de l'activation de l'acide minéral.

**6.** Procédé suivant la revendication 1, **caractérisé en ce que** le traitement chimique de carbonate de fer et/ou de son concentrat sera effectué à l'aide de l'activation de l'acide oïque.